# FASCICULE DE BREVET EUROPEEN

(11) **EP 3 173 327 B1**
(45) Date de publication et mention de la délivrance du brevet: **18.04.2018**
(21) Numéro de dépôt: 16198770.6
(22) Date de dépôt: 15.11.2016
(51) Int. Cl.: B64C 13/22, B64C 27/57

(54) **PROCEDE DE COMMANDE D'UN ROTOR PRINCIPAL DE GIRAVION, SYSTEME DE COMMANDE ASSOCIE ET GIRAVION EQUIPE D'UN TEL SYSTEME DE COMMANDE**
STEUERUNGSVERFAHREN EINES HAUPTROTORS EINES DREHFLÜGELFLUGZEUGS, ENTSPRECHENDES STEUERUNGSSYSTEM UND DREHFLÜGELFLUGZEUG, DAS MIT EINEM SOLCHEN STEUERUNGSSYSTEM AUSGESTATTET IST
A METHOD OF CONTROLLING A MAIN ROTOR OF A ROTORCRAFT, AN ASSOCIATED CONTROL SYSTEM, AND A ROTORCRAFT FITTED WITH SUCH A CONTROL SYSTEM

(30) Priorité: 24.11.2015 FR 1502453
(43) Date de publication de la demande: 31.05.2017
(73) Titulaire: Airbus Helicopters, 13725 Marignane Cedex (FR)
(72) Inventeur: VALLART, Jean-Baptiste, 13100 AIX EN PROVENCE (FR)
(74) Mandataire: GPI & Associés

(56) Documents cités:
- FR-A1- 2 766 158
- US-A1- 2004 010 354
- US-A1- 2007 164 167
- US-A1- 2013 221 153

## Description

La présente invention se rapporte au domaine du pilotage d'aéronefs à voilure(s) tournante(s) tels des giravions dans des phases de vols à faible puissance.

Il peut en être ainsi notamment lors d'une panne d'une motorisation entraînant initialement en rotation un rotor principal d'un giravion permettant de réaliser sa sustentation. C'est également le cas lors d'une phase de vol en autorotation où l'énergie cinétique de descente du giravion permet d'entraîner en rotation le rotor principal de celui-ci provoquant une force de sustentation.

Ainsi, l'invention vise plus particulièrement un procédé de commande d'un rotor principal de giravion adapté pour permettre une phase de vol en autorotation d'un tel giravion. Elle vise également un système de commande d'un rotor principal de giravion et un giravion équipé d'un tel système de commande.

Le plus souvent, la panne d'une motorisation et une phase de vol en autorotation sont deux situations concomitantes. En effet, c'est en général à la suite d'une panne d'au moins un moteur qu'un pilote du giravion passe en urgence dans une phase de vol en autorotation pour faire atterrir au plus vite un giravion.

Toutefois, il est nécessaire pour tout pilote de s'entraîner à ces manoeuvres délicates d'urgence. Une phase de vol en autorotation peut donc également être réalisée volontairement par le pilote avec des moteurs fonctionnels mais ne délivrant pas ou peu de puissance au rotor principal.

Pour déclencher une telle phase de vol en autorotation, le pilote du giravion actionne en général un organe de commande tel qu'un manche de pas collectif permettant de modifier simultanément un pas, dit pas collectif, des pales du rotor principal du giravion. La phase de vol en autorotation peut alors par exemple être déclenchée volontairement par un pilote en positionnant l'organe de commande de manière à désynchroniser la rotation du rotor principal de la rotation des moteurs. Le pilote continue de déplacer l'organe de commande manuellement jusqu'à atteindre un niveau de pas collectif permettant une phase de vol en autorotation qui sera désigné par la suite par l'expression "pas collectif d'autorotation". En outre, ce "pas collectif d'autorotation" est fonction de la taille et du nombre de pales composant le rotor.

Ainsi, un tel "pas collectif d'autorotation" requis peut être déterminé par calcul dès l'étape du dimensionnement du rotor principal. Le "pas collectif d'autorotation" correspond alors à l'angle collectif des pales permettant de produire une énergie cinétique de rotation du rotor principal garantissant un arrondi de la trajectoire du giravion et un posé sur le sol sans choc. Une telle énergie cinétique emmagasinée est alors transformée en énergie potentielle pour poser le giravion sans risque en réduisant, voire en annulant, la vitesse verticale au posé.

En outre lors d'une telle manoeuvre d'autorotation, le niveau de pas courant est affiché sur un instrument de bord désigné par le terme de FLI d'après l'anglicisme "First Limit Indicator". Ce FLI permet également d'indiquer d'une part un "pas de désynchronisation" entre le rotor et le groupe de motorisation et d'autre part un pas maximal/minimal admissible pour le groupe de motorisation entraînant en rotation les pales du rotor.

Cependant dans ce cas, la restitution visuelle sur le FLI ne permet pas d'éviter une désynchronisation inopinée suite à une manoeuvre inadaptée du pilote sur l'organe de commande, tel un manche de pas collectif. L'affichage sur le FLI ne permet pas non plus d'aider à l'équilibrage du régime d'autorotation, et en particulier d'éviter une resynchronisation intempestive entre le rotor et le groupe de motorisation. Or, le basculement de l'état synchronisé à l'état désynchronisé doit être stable pour alléger la charge de travail du pilote. Enfin, il n'est pas possible de garantir le non dépassement des limitations de puissance délivrée par la motorisation.

Certes un pilote surveille régulièrement ses instruments, mais il est aussi amené à observer l'extérieur du giravion et plus particulièrement lors des manoeuvres délicates, telles que les phases de vol en autorotation et/ou les approches suivant une trajectoire à forte pente. En regardant à l'extérieur, le pilote ne peut pas forcément percevoir les dépassements sur l'échelle du FLI.

Par ailleurs, il est également connu d'équiper un giravion avec un système permettant d'identifier une panne d'un moteur et de déclencher alors automatiquement une phase de vol en autorotation. Un tel système et un procédé de commande sont ainsi décrits dans les documents US 2013/0221153 et US 2007/164167.

Cependant, un tel système de commande se limite à un système de sécurité automatique et ne semble pas s'appliquer au cas où un pilote du giravion souhaiterait déclencher volontairement une phase de vol en autorotation du giravion.

De plus, tous ces dispositifs sont des protections pour éviter le dépassement des limitations de puissance de la motorisation dans les hauts niveaux de pas collectif correspondant par exemple à un pas collectif compris entre 7° et 10°. Ils ne garantissent pas non plus la sécurité d'une phase de vol en autorotation dans les niveaux de faible puissance correspondant par exemple à un pas collectif compris entre 0° et 3°.

Le document FR 2766 158 décrit quant à lui un procédé et un système de commande d'un giravion permettant d'aider un pilote à éviter d'atteindre un régime rotor maximal. Un tel procédé génère donc une butée motorisée formant un point dur s'opposant à la libre poursuite du mouvement de pivotement du levier de pas collectif vers le bas lorsque le régime rotor maximal de consigne est atteint ou dépassé. Une telle butée motorisée est par ailleurs asservie en position et est surpassable.

Cependant, dans le document FR 2 766 158, une fois la butée motorisée dépassée, on ne facilite pas le pilotage en autorotation du giravion en asservissant en position le levier de pas collectif dans une position prédéterminée, dite "position d'autorotation". Le levier de pas collectif ne génère donc pas automatiquement une consigne de commande pour asservir un pas collectif courant des pales du rotor principal à un pas collectif d'autorotation.

De plus, le document FR 2 766 158 ne divulgue pas que la butée motorisée est confondue avec une "position de désynchronisation" dans laquelle le levier de pas collectif génère une consigne de commande pour asservir un pas collectif courant des pales du rotor principal avec un "pas collectif de désynchronisation" permettant de désynchroniser le mouvement de rotation entre le rotor principal et un groupe de motorisation du giravion.

Le document US 2004/010354 présente également un procédé permettant d'aider un pilote par un signal sensoriel tactile transmis par des moyens motorisés à un mini-manche de commande du pas collectif.

Cependant comme dans le document FR 2 766 158, un tel document US 2004/010354 ne décrit pas un asservissement en position du mini-manche dans la position d'autorotation ou que la butée surpassable est confondue avec une position de désynchronisation.

Par suite un tel procédé n'est pas optimal pour faciliter le pilotage d'un giravion dans une phase de vol en autorotation.

La présente invention a alors pour objet de proposer un procédé de commande, un système de commande et le giravion associé permettant de s'affranchir des limitations mentionnées ci-dessus. Ce système de commande permet ainsi de communiquer au pilote du giravion une information tactile lors du déplacement d'un organe de commande permettant de modifier un angle de pale collectif du rotor principal du giravion.

Un autre objectif de l'invention est d'éviter une désynchronisation involontaire entre le ou les moteur(s) et le ou les rotor(s) du giravion ou encore un basculement involontaire entre l'état synchronisé et l'état désynchronisé.

L'invention se rapporte donc à un procédé de commande d'un rotor principal de giravion pour réaliser une phase de vol en autorotation du giravion, un tel procédé de commande comportant
- une étape de calcul pour calculer un angle de pale collectif, dit "pas collectif d'autorotation", des pales du rotor principal, ce "pas collectif d'autorotation" générant une vitesse de rotation optimale du rotor principal pour la phase de vol en autorotation du giravion,
- une étape de motorisation d'un organe de commande du pas collectif des pales du rotor principal, cet organe de commande étant mobile sur une amplitude de positions comprises entre deux butées physiques extrémales, une telle étape de motorisation étant mise en oeuvre par des moyens motorisés et étant opérée lorsque, sur l'amplitude de positions de l'organe de commande, un pilote du giravion déplace manuellement l'organe de commande et positionne l'organe de commande au-delà d'une première position de butée de l'organe de commande, une telle première position de butée étant générée par les moyens motorisés en exerçant une première force prédéterminée s'opposant à une force d'actionnement manuel exercée par le pilote sur l'organe de commande, la première force prédéterminée s'exerçant localement sur l'amplitude de positions de l'organe de commande lorsque l'organe de commande est agencé au niveau de la première position de butée, une telle première force prédéterminée étant surpassable par la force d'actionnement manuel exercée par le pilote sur l'organe de commande.

Selon l'invention, un tel procédé de commande est remarquable en ce que les moyens motorisés permettent d'asservir en position l'organe de commande dans une position prédéterminée, dite "position d'autorotation", dans laquelle l'organe de commande génère une consigne de commande pour asservir un pas collectif courant des pales du rotor principal avec le "pas collectif d'autorotation", et en ce que la première position de butée de l'organe de commande est confondue avec une "position de désynchronisation" dans laquelle l'organe de commande génère une consigne de commande pour asservir un pas collectif courant des pales du rotor principal avec un "pas collectif de désynchronisation" permettant de désynchroniser le mouvement de rotation entre le rotor principal et un groupe de motorisation du giravion.

Autrement dit, c'est par une action manuelle sur l'organe de commande, tel un manche de pas collectif, que le pilote peut choisir volontairement d'initier une phase de vol en autorotation du giravion. Le pilote doit alors exercer un effort manuel sur l'organe de commande pour lui permettre de dépasser la première position de butée sur l'amplitude de positions possibles pour cet organe de commande. Une telle première position de butée peut par exemple correspondre à une position dans laquelle l'organe de commande génère une consigne de commande pour commander le pas collectif du rotor principal à une valeur comprise entre 2° et 3° et préférentiellement à une valeur voisine de 2,5°.

Le pilote peut également choisir de ne pas entrer dans la phase de vol en autorotation en arrêtant le déplacement de l'organe de commande à la première position de butée. Ce choix est donc immédiatement ressenti par le pilote par une information tactile dans l'organe de commande et il n'est plus nécessaire pour le pilote de contrôler une information visuelle sur le FLI.

Par ailleurs, un tel procédé de commande peut être mis en oeuvre aussi bien dans le cas d'une panne d'un moteur, et donc d'une phase de vol en autorotation d'urgence, que dans le cas de l'entraînement d'un pilote correspondant à une phase de vol en autorotation volontaire.

En outre, l'étape de motorisation permet d'asservir la position de l'organe de commande pour que la consigne de commande qu'il génère corresponde à une vitesse de rotation requise du rotor principal pour une phase de vol en autorotation.

Par ailleurs, de tels moyens motorisés sont dits actifs car ils permettent de modifier en temps réel des lois de pilotage du déplacement et/ou d'effort de l'organe de commande du giravion. De tels moyens motorisés comportent ainsi un organe de contrôle pour commander un actionneur tel un vérin à commande hydraulique, pneumatique ou électrique, tel un vérin compensateur ou "vérin de Trim", agissant sur une chaîne cinématique d'un organe de commande du giravion dit "conventionnel" ou directement sur l'organe de commande dans le cas de commandes de vol électriques, magnétiques ou optiques. Dans ce cas, l'organe de commande n'est pas cinématiquement ou mécaniquement lié avec une servocommande pilotant par exemple le déplacement d'un plateau de commande du pas collectif du rotor principal.

Dans certains cas particuliers, les moyens motorisés peuvent également être intégrés à l'organe de commande lorsqu'il s'agit de commandes de vol électriques, magnétiques ou optiques à faibles débattements, telles qu'un mini-manche également désigné par le terme anglais de "joystick". Les moyens motorisés sont alors logés dans un support fixe de l'organe de commande et permettent de générer sur le manche de l'organe de commande la première force prédéterminée s'opposant à une force d'actionnement manuel exercée par le pilote sur le manche du joystick.

Les moyens motorisés permettent ainsi à la fois de générer la première position de butée en exerçant la première force prédéterminée et d'ancrer l'organe de commande dans la position d'autorotation une fois que le pilote a actionné l'organe de commande pour passer la première position de butée.

Si la vitesse de rotation courante du rotor principal s'élève au-dessus de la vitesse de rotation requise, alors l'ancrage de l'organe de commande est modifié grâce aux moyens motorisés pour augmenter le pas collectif courant des pales du giravion. Par suite, l'effort ressenti par le pilote dans l'organe de commande augmente, et le pilote peut avantageusement le déplacer dans le sens des efforts décroissants pour corriger la vitesse de rotation du rotor principal. L'organe de commande va donc s'élever lui aussi avec pour effet d'augmenter la charge du rotor principal et de corriger à la baisse sa vitesse de rotation.

Le même mécanisme s'applique pour une variation initiale à la baisse de la vitesse de rotation du rotor principal. Il convient de noter que si le pilote juge opportun de réaliser la manoeuvre différemment, il a une totale liberté de le faire en s'opposant aux efforts d'ancrage qui restent compatibles avec l'actionnement manuel de l'organe de commande.

Par ailleurs, dès que l'organe de commande est déplacé par le pilote dans une position agencée au-delà de la première position de butée, également désignée comme une "butée souple" ou en langue anglaise "soft-stop", l'étape de motorisation permet d'asservir la vitesse de rotation du rotor principal à la vitesse de rotation requise pour une phase de vol en autorotation du giravion. Ainsi, dès la première position de butée dépassée le pilote est sûr que la désynchronisation entre le groupe de motorisation et le rotor principal sera stable pour garantir une phase de vol en autorotation qui soit la plus sûre possible.

En pratique, l'amplitude de positions de l'organe de commande peut comporter une seconde position de butée de l'organe de commande, une telle seconde position de butée étant générée par les moyens motorisés en exerçant une seconde force prédéterminée s'opposant à la force d'actionnement manuel exercée par le pilote du giravion sur l'organe de commande, cette seconde force prédéterminée s'exerçant localement sur l'amplitude de positions de l'organe de commande lorsque l'organe de commande est agencé au niveau de la seconde position de butée, la seconde force prédéterminée étant supérieure à la force d'actionnement manuel exercée par le pilote sur l'organe de commande.

Ainsi, le pilote du giravion ne peut pas déplacer l'organe de commande dans une position agencée au-delà de la seconde position de butée. Une telle seconde position de butée peut alors être désignée par le terme de butée rigide ou indépassable et en langue anglaise par le terme de "hard-stop". Cette seconde position de butée peut par exemple correspondre à une position dans laquelle l'organe de commande génère une consigne de commande pour commander le pas collectif du rotor principal à une valeur comprise entre 0° et 2° et préférentiellement à une valeur voisine de 1°. Dans ce cas, la position d'autorotation de l'organe de commande peut correspondre à une position dans laquelle l'organe de commande génère une consigne de commande pour commander le pas collectif du rotor principal à une valeur comprise entre 1° et 3° et préférentiellement à une valeur voisine de 2°

Dans ce cas, les moyens motorisés permettent à la fois de générer les première et seconde positions de butée en exerçant les première et seconde forces prédéterminées en fonction de la position de l'organe de commande et d'ancrer l'organe de commande dans la position d'autorotation une fois que le pilote a actionné l'organe de commande pour passer la première position de butée. Bien entendu, une fois l'organe de commande ancré dans sa position d'autorotation, le pilote du giravion peut modifier la position de l'organe de commande autour de la position d'ancrage et par exemple rapprocher la position de l'organe de commande vers la seconde position de butée non surpassable.

Dans ce cas et de façon préférentielle, la seconde position de butée de l'organe de commande peut être confondue avec une position limite de l'organe de commande dans laquelle l'organe de commande génère une consigne de commande permettant d'asservir un pas collectif courant des pales du rotor principal à un pas minimal des pales du rotor principal générant une vitesse de rotation maximale du rotor principal lors de la phase de vol en autorotation du giravion.

Ainsi, l'étape de motorisation permet également d'établir en temps réel un pas minimal correspondant à la vitesse de rotation limite du rotor principal avant tout risque d'endommagement. En fonction des conditions environnementales courantes, un tel pas minimal n'est pas nécessairement le "plein petit pas" correspondant à un angle de pale collectif nul.

L'étape de motorisation permet, au niveau de la seconde position de butée de l'organe de commande, de générer localement sur l'amplitude de positions de l'organe de commande la seconde force prédéterminée. Une telle étape de motorisation de l'organe de commande permet alors d'empêcher une réduction de l'angle de pale collectif courant des pales qui conduirait à surpasser la vitesse de rotation limite du rotor principal.

En pratique, le procédé de commande peut comporter une étape de génération de signaux sensoriels permettant d'informer le pilote du giravion, de tels signaux sensoriels étant représentatifs du pas collectif courant des pales du rotor principal et du "pas collectif d'autorotation" calculé lors de l'étape de calcul.

Une telle étape de génération de signaux sensoriels permet alors de fournir au pilote, en plus de l'information tactile qu'il peut percevoir dans l'organe de commande, une information sensorielle qui peut être par exemple visuelle, telle un signal lumineux ou une image sur un écran, sonore ou encore vibratoire. Le pilote peut alors être informé du niveau de puissance courant de la motorisation par rapport au "pas collectif d'autorotation" calculé lors de l'étape de calcul.

De plus, de tels signaux sensoriels peuvent être représentatifs du pas minimal des pales du rotor principal générant une vitesse de rotation maximale du rotor principal lors de la phase de vol en autorotation du giravion.

Le pilote peut ainsi être informé du niveau de puissance courant de la motorisation par rapport aux limitations dues à sa vitesse de rotation maximale.

Avantageusement, les moyens motorisés peuvent permettre de déplacer un manche de l'organe de commande par rapport à un support solidaire d'un châssis du giravion et d'exercer une force de rappel en position sur un tel manche de l'organe de commande lorsqu'une position courante de l'organe de commande est différente de la "position d'autorotation".

Ainsi, les moyens motorisés permettent également d'exercer un retour de force sur le manche de l'organe de commande en générant une force s'opposant à son déplacement et en générant une position d'effort nul correspondant à la "position d'autorotation" de l'organe de commande.

La présente invention a aussi pour objet un système de commande d'un rotor principal de giravion pour réaliser une phase de vol en autorotation du giravion, un tel système de commande comportant :
- un organe de commande du pas collectif des pales du rotor principal, l'organe de commande étant mobile sur une amplitude de positions comprises entre deux butées physiques extrémales,
- une unité de calcul pour calculer un angle de pale collectif, dit "pas collectif d'autorotation", des pales du rotor principal, un tel "pas collectif d'autorotation" générant une vitesse de rotation optimale du rotor principal pour la phase de vol en autorotation du giravion, et
- des moyens motorisés pour générer, sur l'amplitude de positions de l'organe de commande, une première position de butée de l'organe de commande, une telle première position de butée étant générée en exerçant une première force prédéterminée s'opposant à une force d'actionnement manuel exercée par un pilote du giravion sur l'organe de commande, cette première force prédéterminée s'exerçant localement sur l'amplitude de positions de l'organe de commande lorsque l'organe de commande est agencé au niveau de la première position de butée, cette première force prédéterminée étant surpassable par la force d'actionnement manuel exercée par le pilote sur l'organe de commande.

Selon l'invention, le système de commande est remarquable en ce que les moyens motorisés asservissent en position ledit organe de commande dans une position prédéterminée, dite "position d'autorotation", dans laquelle ledit organe de commande génère une consigne de commande pour asservir un pas collectif courant des pales du rotor principal avec le "pas collectif d'autorotation" et en ce que la première position de butée de l'organe de commande est confondue avec une "position de désynchronisation" dans laquelle l'organe de commande génère une consigne de commande pour asservir un pas collectif courant des pales du rotor principal avec un "pas collectif de désynchronisation" permettant de désynchroniser le mouvement de rotation entre le rotor principal et un groupe de motorisation du giravion.

En pratique, l'unité de calcul du système de commande peut être formée par un ordinateur de bord ou encore un calculateur ou un micro-processeur apte à effectuer rapidement et automatiquement un grand nombre de calculs permettant de déterminer à chaque instant le "pas collectif d'autorotation".

Les moyens motorisés permettent quant à eux d'effectuer un ancrage de l'organe de commande et d'asservir sa position courante avec la position prédéterminée, dite "position d'autorotation". De tels moyens motorisés permettent également de générer les lois de commande du déplacement et d'effort affectées à l'organe de commande et notamment de déterminer la première force prédéterminée s'exerçant sur l'organe de commande au niveau de la première position de butée.

De plus, dès que la butée souple sur l'amplitude de positions de l'organe de commande est franchie, le pilote du giravion sait que l'organe de commande est précisément positionné dans la position dite "position d'autorotation". L'organe de commande reste donc ancré dans sa position courante et aucun mouvement brusque n'est transmis à l'organe de commande ce qui permet d'éviter de surprendre le pilote du giravion.

Selon un exemple de réalisation avantageux, les moyens motorisés peuvent générer, sur l'amplitude de positions de l'organe de commande, une seconde position de butée de l'organe de commande, une telle seconde position de butée étant générée en exerçant une seconde force prédéterminée s'opposant à la force d'actionnement manuel exercée par le pilote du giravion sur l'organe de commande, cette seconde force prédéterminée s'exerçant localement sur l'amplitude de positions de l'organe de commande lorsque l'organe de commande est agencé au niveau de la seconde position de butée, la seconde force prédéterminée étant supérieure à la force d'actionnement manuel exercée par le pilote sur l'organe de commande.

Ainsi, la seconde position de butée est, comme la première position de butée souple, générée grâce aux moyens motorisés mais ne peut être dépassée. Cette seconde position de butée est donc a priori distincte, sur l'amplitude de positions de l'organe de commande, des butées physiques extrémales.

En pratique, la seconde position de butée de l'organe de commande peut être confondue avec une position limite de l'organe de commande dans laquelle l'organe de commande génère une consigne de commande permettant d'asservir un pas collectif courant des pales du rotor principal à un pas minimal des pales du rotor principal générant une vitesse de rotation maximale du rotor principal lors de la phase de vol en autorotation du giravion.

De cette manière, le système de commande permet de garantir le non dépassement des limitations structurelles du groupe de motorisation telles que notamment sa vitesse de rotation maximale qui pourrait entraîner un endommagement prématuré des ensembles mécaniques le constituant.

Selon un exemple de réalisation avantageux, le système de commande peut comporter des moyens d'information générant des signaux sensoriels pour informer le pilote du giravion, de tels signaux sensoriels étant représentatifs du pas collectif courant des pales du rotor principal et du "pas collectif d'autorotation" calculé par l'unité de calcul.

Comme déjà évoqué, de tels moyens d'information peuvent ainsi permettre de générer un signal lumineux, visuel, sonore ou vibratoire permettant d'indiquer au pilote le niveau du pas collectif courant des pales du rotor principal et de le comparer avec le "pas collectif d'autorotation" calculé par l'unité de calcul.

Avantageusement, de tels signaux sensoriels peuvent être représentatifs du pas minimal des pales du rotor principal générant une vitesse de rotation maximale du rotor principal lors de la phase de vol en autorotation du giravion.

De cette manière, le pilote du giravion peut également comparer à tout instant le niveau du pas collectif courant des pales du rotor principal avec le pas minimal admissible pour le groupe de motorisation du rotor principal.

En pratique, les moyens motorisés peuvent déplacer un manche de l'organe de commande par rapport à un support solidaire d'un châssis du giravion et exercer une force de rappel en position sur le manche de l'organe de commande lorsqu'une position courante de l'organe de commande est différente de la "position d'autorotation".

Selon un autre aspect de l'invention, celle-ci se rapporte également à un giravion particulier. Un tel giravion est en effet remarquable en ce qu'il comporte un système de commande tel que décrit précédemment pour commander un rotor principal et réaliser une phase de vol en autorotation du giravion.

L'invention et ses avantages apparaîtront avec plus de détails dans le cadre de la description qui suit avec des exemples donnés à titre illustratif en référence aux figures annexées qui représentent :
- la figure 1, une vue schématique de côté d'un giravion conforme à l'invention,
- les figures 2 à 4, des schémas de différentes amplitudes de positions d'un organe de commande, conformément à l'invention, et
- la figure 5, un logigramme illustrant certaines étapes du procédé de commande conforme à l'invention.

Comme déjà évoqué l'invention se rapport à un système de commande d'un rotor principal de giravion.

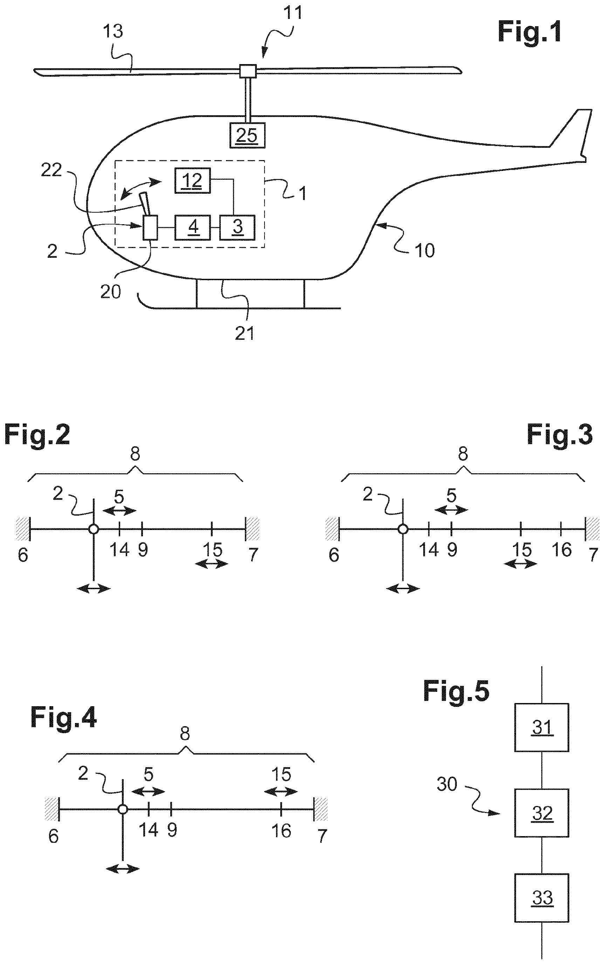

Tel que représenté à la figure 1, un tel système de commande 1 comporte un organe de commande 2 permettant de modifier le pas collectif des pales 13 du rotor principal 11 entraîné en rotation par un groupe de motorisation 25. En outre, un tel organe de commande 2 peut par exemple consister en une commande de vol électrique, telle un mini-manche, et comporte un manche 22 mobile par rapport à un support 20 solidaire du châssis 21 du giravion 10.

Tel que représenté aux figures 2 à 4, l'organe de commande 2 est mobile sur une amplitude 8 de positions distinctes entre deux butées physiques extrémales 6 et 7.

Un tel système de commande 1 comporte également une unité de calcul 3, telle que par exemple un calculateur, permettant de calculer à tout instant un angle de pale collectif, dit "pas collectif d'autorotation" des pales 13 du rotor principal 11. Un tel "pas collectif d'autorotation" permet au rotor principal 11 de tourner à une vitesse optimale pour réaliser cette phase de vol en autorotation du giravion 10.

Enfin, un tel système de commande 1 comporte des moyens motorisés 4 permettant, d'une part, d'asservir en position l'organe de commande 2 dans une position prédéterminée dite "position d'autorotation" 9 et, d'autre part, de générer sur l'amplitude 8 de positions une première position de butée 5 surpassable manuellement par le pilote du giravion 10.

Selon une première variante de l'invention telle que représentée à la figure 2, une telle première position de butée 5 peut avantageusement être confondue avec une "position de désynchronisation" 14 dans laquelle l'organe de commande 2 génère une consigne de commande permettant de désynchroniser la rotation du rotor 11 avec celle du groupe de motorisation 25..

Dans ce cas, dès que le pilote exerce une force d'actionnement manuel supérieure à la première force prédéterminée s'exerçant sur l'organe de commande 2 au niveau de la première position de butée 5, les moyens motorisés 4 permettent alors de déplacer l'organe de commande 2 vers la "position d'autorotation" 9.

Selon une seconde variante de l'invention telle que représentée à la figure 3, une telle première position de butée 5 peut également être confondue avec la "position d'autorotation" 9. Dans ce cas, dès que le pilote exerce une force d'actionnement manuel supérieure à la première force prédéterminée s'exerçant sur l'organe de commande 2 au niveau de la première position de butée 5, les moyens motorisés 4 permettent instantanément d'asservir en position l'organe de commande 2 à la "position d'autorotation" 9 qui peut donc être distinct de la "position de désynchronisation" 14.

En outre tel que représenté à la figure 1, le système de commande 1 peut également comporter des moyens d'information 12 pour indiquer au pilote du giravion 10 de quelle marge de pilotage le pilote dispose sur l'amplitude 8 de positions de l'organe de commande 2. Ces moyens d'information 12 comportent avantageusement un écran pour émettre des signaux sensoriels visuels tels des images ou des lumières indiquant par exemple le niveau de l'angle de pale collectif des pales 13 du rotor principal 11 par rapport au "pas collectif d'autorotation" et/ou par rapport à un pas minimal admissible pour le groupe de motorisation 25 du rotor principal 11.

En outre, et tel que représenté aux figures 3 et 4, un tel pas minimal admissible pour le groupe de motorisation 25 peut être obtenu dans une position limite 16 de l'organe de commande 2 sur l'amplitude 8 de positions de cet organe de commande 2.

Par ailleurs telle que représentée aux figures 2 à 4, l'amplitude 8 des positions de l'organe de commande 2 peut également comporter une seconde position de butée 15 non surpassable manuellement par un pilote du giravion. Une telle seconde position de butée 15 est ainsi générée en exerçant une seconde force prédéterminée sur l'organe de commande 2 s'opposant à une force d'actionnement manuel exercée par le pilote du giravion 10 sur l'organe de commande 2.

Tel que représenté à la figure 4, la position limite 16 peut être confondue avec cette seconde position de butée 15 ménagée sur l'amplitude 8 des positions de l'organe de commande 2. De cette manière, le pilote du giravion 10 se prémunit d'éventuels dépassements de la vitesse de rotation maximale admissible pour le groupe de motorisation 25 notamment dans le cas d'une autorotation volontairement déclenchée par un pilote à des fins d'entraînement. Un tel groupe de motorisation 25 conserve alors toujours une vitesse de rotation compatible avec ses limites structurelles.

Telle que représenté à la figure 5, l'invention se rapporte donc également au procédé de commande 30 d'un rotor principal 11 de giravion 10 pour réaliser une phase de vol en autorotation. Un tel procédé de commande peut notamment comporter :
- une étape de calcul 31 pour calculer à tout instant un "pas collectif d'autorotation" des pales 13 du rotor principal 11 générant une vitesse de rotation optimale du rotor principal 11 pour cette phase de vol en autorotation,
- une étape de motorisation 32 de l'organe de commande 2 du pas collectif des pales 13 du rotor principal 11, une telle étape de motorisation 32 permettant d'asservir en position l'organe de commande 2 dans une "position d'autorotation" 9 dans laquelle il génère une consigne de commande pour asservir un pas collectif courant des pales 13 du rotor principal 11 avec le "pas collectif d'autorotation",
- une étape de génération de signaux sensoriels 33 permettant d'informer le pilote du giravion 10 de la valeur du pas collectif courant des pales 13 du rotor principal 11 et par exemple du "pas collectif d'autorotation" calculé lors de l'étape de calcul 31.

L'étape de motorisation 32 est opérée lorsque, sur l'amplitude 8 de positions de l'organe de commande 2, un pilote du giravion 10 déplace volontairement et manuellement l'organe de commande 2 et le positionne au-delà de la première position de butée 5 en direction de la butée physique extrémale 7.

Cette première position de butée 5 est par ailleurs générée en exerçant une première force prédéterminée s'opposant à une force d'actionnement manuel exercée par ledit pilote sur ledit organe de commande 2. La première force prédéterminée s'exerce alors localement sur l'amplitude 8 de positions de l'organe de commande 2 agencé au niveau de la première position de butée 5.

Enfin comme déjà évoqué, la première force prédéterminée est surpassable par la force d'actionnement manuel exercée par le pilote sur l'organe de commande 2 si bien que c'est l'action de déplacement de l'organe de commande 2 au-delà de la première position de butée 5 qui permet au pilote d'actionner l'étape de motorisation 32 de l'organe de commande 2.

Comme déjà évoqué, les moyens motorisés 4 permettent à la fois de générer les première et seconde positions de butée 5 et 15 en exerçant les première et seconde forces prédéterminées en fonction de la position de l'organe de commande 2 puis d'ancrer l'organe de commande 2 dans la position d'autorotation 9 une fois que le pilote a actionné l'organe de commande 2 vers la butée physique extrémale 7 pour passer la première position de butée 5 en surpassant la première force prédéterminée.

Une fois l'organe de commande 2 positionné par le pilote dans une zone de son amplitude 8 de positions au delà de la première position de butée 5, l'organe de commande 2 peut alors être déplacé automatiquement vers la "position d'autorotation" 9 puis ancré dans cette "position d'autorotation" 9.

Cependant, le pilote du giravion 10 peut toujours modifier la position de l'organe de commande 2 autour de la "position d'autorotation" 9 et par exemple rapprocher la position de l'organe de commande 2 vers la seconde position de butée 15 non surpassable.

## Revendications

1. Procédé de commande (30) d'un rotor principal (11) de giravion (10) pour réaliser une phase de vol en autorotation dudit giravion (10), ledit procédé de commande comportant :
• une étape de calcul (31) pour calculer un angle de pale collectif, dit "pas collectif d'autorotation", des pales (13) dudit rotor principal (11), ledit "pas collectif d'autorotation" générant une vitesse de rotation optimale dudit rotor principal (11) pour ladite phase de vol en autorotation dudit giravion (10),
une étape de motorisation (32) d'un organe de commande (2) du pas collectif des pales (13) dudit rotor principal (11), ledit organe de commande (2) étant mobile sur une amplitude (8) de positions comprises entre deux butées physiques extrémales (6, 7), ladite étape de motorisation (32) étant mise en oeuvre par des moyens motorisés (4) et étant opérée lorsque, sur ladite amplitude (8) de positions dudit organe de commande (2), un pilote du giravion (10) déplace manuellement ledit organe de commande (2) et positionne ledit organe de commande (2) au-delà d'une première position de butée (5) dudit organe de commande (2), ladite première position de butée (5) étant générée par lesdits moyens motorisés (4) en exerçant une première force prédéterminée s'opposant à une force d'actionnement manuel exercée par ledit pilote sur ledit organe de commande (2), ladite première force prédéterminée s'exerçant localement sur ladite amplitude (8) de positions dudit organe de commande (2) lorsque ledit organe de commande (2) est agencé au niveau de ladite première position de butée (5), ladite première force prédéterminée étant surpassable par ladite force d'actionnement manuel exercée par ledit pilote sur ledit organe de commande (2),
**caractérisé en ce que** lesdits moyens motorisés (4) permettent d'asservir en position ledit organe de commande (2) dans une position prédéterminée, dite "position d'autorotation" (9), dans laquelle ledit organe de commande (2) génère une consigne de commande pour asservir un pas collectif courant des pales (13) dudit rotor principal (11) audit "pas collectif d'autorotation", et **en ce que** ladite première position de butée (5) dudit organe de commande (2) est confondue avec une "position de désynchronisation" (14) dans laquelle ledit organe de commande (2) génère une consigne de commande pour asservir un pas collectif courant des pales (13) du rotor principal (11) avec un "pas collectif de désynchronisation" permettant de désynchroniser le mouvement de rotation entre ledit rotor principal (11) et un groupe de motorisation (25) dudit giravion (10).

2. Procédé selon la revendication 1,
**caractérisé en ce que** ladite amplitude (8) de positions dudit organe de commande (2) comporte une seconde position de butée (15) dudit organe de commande (2), ladite seconde position de butée (15) étant générée par lesdits moyens motorisés (4) en exerçant une seconde force prédéterminée s'opposant à ladite force d'actionnement manuel exercée par ledit pilote dudit giravion (10) sur ledit organe de commande (2), ladite seconde force prédéterminée s'exerçant localement sur ladite amplitude (8) de positions dudit organe de commande (2) lorsque ledit organe de commande (2) est agencé au niveau de ladite seconde position de butée (15), ladite seconde force prédéterminée étant supérieure à ladite force d'actionnement manuel exercée par ledit pilote sur ledit organe de commande (2).

3. Procédé selon la revendication 2,
**caractérisé en ce que** ladite seconde position de butée (15) dudit organe de commande (2) est confondue avec une position limite (16) dudit organe de commande (2) dans laquelle ledit organe de commande (2) génère une consigne de commande permettant d'asservir un pas collectif courant des pales (13) dudit rotor principal (11) à un pas minimal des pales (13) dudit rotor principal (11) générant une vitesse de rotation maximale dudit rotor principal (11) lors de ladite phase de vol en autorotation dudit giravion (10).

4. Procédé selon l'une quelconque des revendications 1 à 3,
**caractérisé en ce que** ledit procédé de commande (30) comporte une étape de génération de signaux sensoriels (33) permettant d'informer ledit pilote dudit giravion (10), lesdits signaux sensoriels étant représentatifs dudit pas collectif courant des pales (13) dudit rotor principal (11) et dudit "pas collectif d'autorotation" calculé lors de ladite étape de calcul (31).

5. Procédé selon la revendication 4,
**caractérisé en ce que** lesdits signaux sensoriels sont représentatifs dudit pas minimal desdites pales (13) dudit rotor principal (11) générant une vitesse de rotation maximale dudit rotor principal (11) lors de ladite phase de vol en autorotation dudit giravion (10).

6. Procédé selon l'une quelconque des revendications 1 à 5,
**caractérisé en ce que** lesdits moyens motorisés (4) permettent de déplacer un manche (22) dudit organe de commande (2) par rapport à un support (20) solidaire d'un châssis (21) dudit giravion (10) et d'exercer une force de rappel en position sur ledit manche (22) dudit organe de commande (2) lorsqu'une position courante dudit organe de commande (2) est différente de ladite "position d'autorotation" (9).

7. Système de commande (1) d'un rotor principal (11) de giravion (10) pour réaliser une phase de vol en autorotation dudit giravion (10), ledit système de commande (1) comportant :
• un organe de commande (2) du pas collectif des pales (13) dudit rotor principal (11), ledit organe de commande (2) étant mobile sur une amplitude (8) de positions comprises entre deux butées physiques extrémales (6, 7),
• une unité de calcul (3) pour calculer un angle de pale collectif, dit "pas collectif d'autorotation", des pales (13) dudit rotor principal (11), ledit "pas collectif d'autorotation" permettant audit rotor principal (11) de tourner à une vitesse de rotation optimale pour ladite phase de vol en autorotation dudit giravion (10), et
• des moyens motorisés (4) pour générer, sur ladite amplitude (8) de positions dudit organe de commande (2), une première position de butée (5) dudit organe de commande (2), ladite première position de butée (5) étant générée en exerçant une première force prédéterminée s'opposant à une force d'actionnement manuel exercée par un pilote dudit giravion (10) sur ledit organe de commande (2), ladite première force prédéterminée s'exerçant localement sur ladite amplitude (8) de positions dudit organe de commande (2) lorsque ledit organe de commande est agencé au niveau de ladite première position de butée (5), ladite première force prédéterminée étant surpassable par ladite force d'actionnement manuel exercée par ledit pilote sur ledit organe de commande (2),
**caractérisé en ce que** lesdits moyens motorisés (4) asservissent en position ledit organe de commande (2) dans une position prédéterminée, dite "position d'autorotation" (9), dans laquelle ledit organe de commande (2) génère une consigne de commande pour asservir un pas collectif courant des pales (13) dudit rotor principal (11) audit "pas collectif d'autorotation" .et **en ce que** ladite première position de butée (5) dudit organe de commande (2) est confondue avec une "position de désynchronisation" (14) dans laquelle ledit organe de commande (2) génère une consigne de commande pour asservir un pas collectif courant des pales (13) du rotor principal (11) avec un "pas collectif de désynchronisation" permettant de désynchroniser le mouvement de rotation entre ledit rotor principal (11) et un groupe de motorisation (25) dudit giravion (10).

8. Système de commande selon la revendication 7,
**caractérisé en ce que** lesdits moyens motorisés (4) génèrent, sur ladite amplitude (8) de positions dudit organe de commande (2), une seconde position de butée (15) dudit organe de commande (2), ladite seconde position de butée (15) étant générée en exerçant une seconde force prédéterminée s'opposant à ladite force d'actionnement manuel exercée par ledit pilote dudit giravion (10) sur ledit organe de commande (2), ladite seconde force prédéterminée s'exerçant localement sur ladite amplitude (8) de positions dudit organe de commande (2) lorsque ledit organe de commande (2) est agencé au niveau de ladite seconde position de butée (15), ladite seconde force prédéterminée étant supérieure à ladite force d'actionnement manuel exercée par ledit pilote sur ledit organe de commande (2).

9. Système de commande selon la revendication 8,
**caractérisé en ce que** ladite seconde position de butée (15) dudit organe de commande (2) est confondue avec une position limite (16) dudit organe de commande (2) dans laquelle ledit organe de commande (2) génère une consigne de commande permettant d'asservir un pas collectif courant des pales (13) dudit rotor principal (11) à un pas minimal desdites pales (13) dudit rotor principal (11) générant une vitesse de rotation maximale dudit rotor principal (11) lors de ladite phase de vol en autorotation dudit giravion (10).

10. Système de commande selon l'une quelconque des revendications 7 à 9,
**caractérisé en ce que** ledit système de commande (1) comporte des moyens d'information (12) générant des signaux sensoriels pour informer ledit pilote dudit giravion (10), lesdits signaux sensoriels étant représentatifs dudit pas collectif courant des pales (13) dudit rotor principal (11) et dudit "pas collectif d'autorotation" calculé par ladite unité de calcul (3).

11. Système de commande selon la revendication 10,
**caractérisé en ce que** lesdits signaux sensoriels sont représentatifs dudit pas minimal desdites pales (13) dudit rotor principal (11) générant une vitesse de rotation maximale dudit rotor principal (11) lors de ladite phase de vol en autorotation dudit giravion (10).

12. Système de commande selon l'une quelconque des revendications 7 à 11
**caractérisé en ce que** lesdits moyens motorisés (4) déplacent un manche (22) dudit organe de commande (2) par rapport à un support (20) solidaire d'un châssis (21) dudit giravion (10) et exercent une force de rappel en position sur ledit manche (22) dudit organe de commande (2) lorsqu'une position courante dudit organe de commande (2) est différente de ladite "position d'autorotation" (9).

13. Giravion (10) comportant un rotor principal (11) pour réaliser au moins la sustentation dudit giravion (10),
**caractérisé en ce que** ledit giravion (10) comporte un système de commande (1) selon l'une quelconques des revendications 7 à 12 pour commander ledit rotor principal (11) et réaliser une phase de vol en autorotation dudit giravion (10).

## Patentansprüche

1. Steuerverfahren (30) eines Hauptrotors (11) eines Drehflügelflugzeugs (10) zur Ausführung einer Autorotationsflugphase des Drehflügelflugzeugs (10), wobei das Steuerverfahren aufweist:
• einen Berechnungsschritt (31) zum Berechnen eines kollektiven Rotorblattverstellwinkels, genannt "kollektiver Autorotationsverstellwinkel" der Rotorblätter (13) des Hauptrotors (11), wobei der "kollektive Autorotationsverstellwinkel" eine optimale Rotationsgeschwindigkeit des Hauptrotors (11) für die Autorotationsflugphase des Drehflügelflugzeugs (10) erzeugt,
einen Schritt (32) der Motorisierung eines Steuerelements (2) des kollektiven Verstellwinkels der Rotorblätter (13) des Hauptrotors (11), wobei das Steuerelement (2) innerhalb einer Amplitude (8) von Positionen zwischen zwei physischen Endanschlägen (6, 8) beweglich ist, wobei der Motorisierungsschritt (32) durch motorisierte Mittel (4) realisiert wird und ausgeführt wird, wenn innerhalb der Amplitude (8) von Stellungen des Steuerelements (2) ein Pilot des Drehflügelflugzeugs (10) das Steuerelement (2) manuell bewegt und das Steuerelement (2) über eine zweite Anschlagstellung (5) des Steuerelements (2) hinaus bewegt, wobei die erste Anschlagstellung (5) durch die motorisierten Mittel (4) erzeugt wird durch Ausüben einer ersten vorbestimmten Kraft, die sich einer Kraft der manuellen Betätigung, die von dem Piloten auf das Steuerelement (2) ausgeübt wird, widersetzt, wobei die erste vorbestimmte Kraft lokal auf die Amplitude (8) der Stellungen des Steuerelements (2) einwirkt, wenn das Steuerelement (2) auf der Höhe der ersten Anschlagsposition (5) angeordnet ist, wobei die erste vorbestimmte Kraft durch die Kraft der manuellen Betätigung, die von dem Piloten auf das Steuerelement (2) ausgeübt wird, überwindbar ist,
**dadurch gekennzeichnet, dass**
die motorisierten Mittel (4) es erlauben, das Steuerelement (2) auf eine vorbestimmte Position, genannt "Autorotationsposition" (9) einzuregeln, in der das Steuerelement (2) einen Steuerungssollwert erzeugt, um den aktuellen kollektiven Rotorblattverstellwinkel (13) des Hauptrotors (11) auf den "kollektiven Autorotationsverstellwinkel" zu regeln und dadurch, dass die erste Anschlagsposition (5) des Steuerelements (2) gleich einer "Desynchronisationsposition" (14) ist, in der das Steuerelement (2) einen Steuerungssollwert erzeugt, um einen aktuellen kollektiven Rotorblattverstellwinkel (13) des Hauptrotors (11) auf einen "kollektiven Desynchronisationsverstellwinkel" zu regeln, der es erlaubt, die Rotationsbewegung zwischen dem Hauptrotor (11) und einem Antriebsaggregat (25) des Drehflügelflugzeugs (10) zu desynchronisieren.

2. Verfahren nach Anspruch 1,
**dadurch gekennzeichnet, dass**
die Amplitude (8) von Positionen des Steuerelements (2) eine zweite Anschlagsposition (15) des Steuerelements (2) aufweist, wobei die zweite Anschlagsposition (15) von den motorisierten Mitteln (4) erzeugt wird durch Ausüben einer zweiten vorbestimmten Kraft, die sich der manuellen Betätigungskraft widersetzt, die durch den Piloten des Drehflügelflugzeugs (10) auf das Steuerelement (2) ausgeübt wird, wobei die zweite vorbestimmte Kraft lokal auf die Amplitude (8) der Positionen des Steuerelements (2) einwirkt, wenn das Steuerelement (2) auf der Höhe der zweiten Anschlagsposition (15) angeordnet ist, wobei die zweite vorbestimmte Kraft größer ist als die manuelle Betätigungskraft, die von dem Piloten auf das Steuerelement (2) ausgeübt wird.

3. Verfahren nach Anspruch 2,
**dadurch gekennzeichnet, dass**
die zweite Anschlagsposition (15) des Steuerelements (2) gleich einer Endstellung (16) des Steuerelements (2) ist, in der das Steuerelement (2) einen Steuerungssollwert erzeugt, der es erlaubt, einen aktuellen kollektiven Rotorblattverstellwinkel (13) des Hauptrotors (11) auf einen minimalen Rotorblattverstellwinkel (13) des Hauptrotors (11) zu regeln, der eine maximale Rotationsgeschwindigkeit des Hauptrotors (11) während der Autorotationsflugphase des Drehflügelflugzeugs (10) erzeugt.

4. Verfahren nach einem der Ansprüche 1 bis 3,
**dadurch gekennzeichnet, dass**
das Steuerverfahren (30) einen Schritt der Erzeugung von sensorischen Signalen (33) umfasst, die es ermöglichen, den Piloten des Drehflügelflugzeugs (10) zu informieren, wobei die sensorischen Signale den aktuellen kollektiven Rotorblattverstellwinkel (13) des Hauptrotors (11) und den "kollektiven Autorotationsverstellwinkel", der während des Berechnungsschritts (31) berechnet wird, darstellen.

5. Verfahren nach Anspruch 4,
**dadurch gekennzeichnet, dass**
die sensorischen Signale den minimalen Rotorblattverstellwinkel (13) des Hauptrotors (11) darstellen, der eine maximale Rotationsgeschwindigkeit des Hauptrotors (11) während der Autorotationsflugphase des Drehflügelflugzeugs (10) erzeugt.

6. Verfahren nach einem der Ansprüche 1 bis 5,
**dadurch gekennzeichnet, dass**
die motorisierten Mittel (4) es erlauben, einen Griff (22) des Steuerelements (2) relativ zu einem Träger (20), der mit einem Chassis (21) des Drehflügelflugzeugs (10) fest verbunden ist, zu bewegen und eine Positionsrückstellkraft auf den Griff (22) des Steuerelements (2) auszuüben, wenn eine aktuelle Stellung des Steuerelements (2) verschieden ist von der "Autorotationsstellung" (9).

7. Steuerungssystem (1) eines Hauptrotors (11) eines Drehflügelflugzeugs (10) zur Ausführung einer Autorotationsflugphase des Drehflügelflugzeugs (10), wobei das Steuerungssystem (1) aufweist:
• ein Steuerelement (2) des kollektiven Rotorblattverstellwinkels (13) des Hauptrotors (11), wobei das Steuerelement (2) über eine Positionsamplitude (8) beweglich ist zwischen zwei physischen Endanschlägen (6, 7),
• eine Recheneinheit (3) zum Berechnen eines kollektiven Rotorblattverstellwinkels, genannt "kollektiver Autorotationsverstellwinkel" der Rotorblätter (13) des Hauptrotors (11), wobei der "kollektive Autorotationsverstellwinkel" es dem Hauptrotor (11) erlaubt, sich mit einer für die Autorotationsflugphase des Drehflügelflugzeugs (10) optimalen Drehgeschwindigkeit zu drehen, und
• motorisierte Mittel (4) zum Erzeugen einer ersten Anschlagsposition (5) des Steuerelements (2) innerhalb der Positionsamplitude (8) des Steuerelements (2), wobei die erste Anschlagsposition (5) erzeugt wird durch Ausüben einer ersten vorbestimmten Kraft, die sich einer manuellen Betätigungskraft, die von einem Piloten des Drehflügelflugzeugs (10) auf das Steuerelement (2) ausgeübt wird, widersetzt, wobei die erste vorbestimmte Kraft lokal auf die Positionsamplitude (8) des Steuerelements (2) einwirkt, wenn das Steuerelement auf der Höhe der ersten Anschlagsposition (5) angeordnet ist, wobei die erste vorbestimmte Kraft durch die manuelle Betätigungskraft, die von dem Piloten auf das Steuerelement (2) ausgeübt wird, überwindbar ist,
**dadurch gekennzeichnet, dass**
die motorisierten Mittel (4) das Steuerelement (2) in eine vorbestimmte Position, genannt "Autorotationsposition" (9) einregeln, in der das Steuerelement (2) einen Steuerungssollwert erzeugt, um einen aktuellen kollektiven Rotorblattverstellwinkel (13) des Hauptrotors (11) auf den "kollektiven Autorotationsverstellwinkel" regelt und dadurch, dass die erste Anschlagsposition (5) des Steuerelements (2) gleich einer "Desynchronisationsstellung" (14) ist, in der das Steuerelement (2) einen Steuerungssollwert erzeugt, um einen aktuellen kollektiven Rotorblattverstellwinkel (13) des Hauptrotors (11) auf einen "kollektiven Desynchronisationsverstellwinkel" zu regeln, der es erlaubt, die Rotationsbewegung zwischen dem Hauptrotor (11) und einem Antriebsaggregat (25) des Drehflügelflugzeugs (10) zu desynchronisieren.

8. Steuerungssystem nach Anspruch 7,
**dadurch gekennzeichnet, dass**
die motorisierten Mittel (4) innerhalb der Positionsamplitude (8) des Steuerelements (2) eine zweite Anschlagsposition (15) des Steuerelements (2) erzeugen, wobei die zweite Anschlagsposition (15) erzeugt wird durch Anwenden einer zweiten vorbestimmten Kraft, die sich der manuellen Betätigungskraft widersetzt, die von dem Piloten des Drehflügelflugzeugs (10) auf das Steuerelement (2) ausgeübt wird, wobei die zweite vorbestimmte Kraft lokal auf die Positionsamplitude (8) des Steuerelements (2) einwirkt, wenn das Steuerelement (2) auf der Höhe der zweiten Anschlagsposition (15) angeordnet ist, wobei die zweite vorbestimmte Kraft größer als die manuelle Betätigungskraft ist, die von dem Piloten auf das Steuerelement (2) ausgeübt wird.

9. Steuerungssystem nach Anspruch 8,
**dadurch gekennzeichnet, dass**
die zweite Anschlagsposition (15) des Steuerelements (2) gleich einer Endstellung (16) des Steuerelements (2) ist, in der das Steuerelement (2) einen Steuerungssollwert erzeugt, der es erlaubt, einen aktuellen kollektiven Rotorblattverstellwinkel (13) des Hauptrotors auf einen minimalen Verstellwinkel der Rotorblätter (13) des Hauptrotors (11) zu regeln, der eine maximale Rotationsgeschwindigkeit des Hauptrotors (11) während der Autorotationsflugphase des Drehflügelflugzeugs (10) erzeugt.

10. Steuerungssystem nach einem der Ansprüche 7 bis 9,
**dadurch gekennzeichnet, dass**
das Steuerungssystem (1) Informationsmittel (12) aufweist, die sensorische Signale erzeugen, um den Piloten des Drehflügelflugzeugs (10) zu informieren, wobei die sensorischen Signale den aktuellen kollektiven Rotorblattverstellwinkel (13) des Hauptrotors (11) und den "kollektiven Autorotationsverstellwinkel", der durch die Recheneinheit (3) berechnet wird, darstellen.

11. Steuerungssystem nach Anspruch 10,
**dadurch gekennzeichnet, dass**
die sensorischen Signale den minimalen Rotorblattverstellwinkel (13) des Hauptrotors (11) darstellen, der eine maximale Rotationsgeschwindigkeit des Hauptrotors (11) während der Autorotationsflugphase des Drehflügelflugzeugs (10) erzeugt.

12. Steuerungssystem nach einem der Ansprüche 7 bis 11,
**dadurch gekennzeichnet, dass**
die motorisierten Mittel (4) einen Griff (22) des Steuerelements (2) relativ zu einem Träger (20), der mit einem Chassis (21) des Drehflügelflugzeugs (10) fest verbunden ist, bewegen und eine Positionsrückstellkraft auf den Griff (22) des Steuerelements (2) ausüben, wenn die aktuelle Position des Steuerelements (2) von der "Autorotationsposition" (9) verschieden ist.

13. Drehflügelflugzeug (10) mit einem Hauptrotor (11) zum Erzeugen mindestens des Auftriebs des Drehflügelflugzeugs (10),
**dadurch gekennzeichnet, dass**
das Drehflügelflugzeug (10) ein Steuerungssystem (1) nach einem der Ansprüche 7 bis 12 aufweist zur Steuerung des Hauptrotors (11) und zur Ausführung einer Autorotationsflugphase des Drehflügelflugzeugs (10).

## Claims

1. A method for controlling (30) a main rotor (11) of a rotorcraft (10) for performing an autorotation flight phase of said rotorcraft (10), said control method comprising:
• a calculation step (31) for calculating a collective blade angle, said "autorotation collective pitch", of the blades (13) of said main rotor (11), said "autorotation collective pitch" generating an optimum speed of rotation of said main rotor (11) for said autorotation flight phase of said rotorcraft (10),
a drive step (32) for motor-driving a control member (2) for controlling the collective pitch of the blades (13) of said main rotor (11), said control member (2) being mobile over a range (8) of positions between two physical end stops (6, 7), said drive step (32) being implemented by motorised means (4) and being performed when, over said range (8) of positions of said control member (2), a pilot of the rotorcraft (10) manually displaces said control member (2) and positions said control member (2) beyond a first stop position (5) of said control member (2), said first stop position (5) being generated by said motorised means (4) by exerting a first predetermined force which opposes a manual actuation force exerted by said pilot on said control member (2), said first predetermined force being exerted locally on said range (8) of positions of said control member (2) when said control member (2) is arranged at the level of said first stop position (5), said first predetermined force being able to be surpassed by said manual actuation force exerted on said control member (2) by said pilot,
**characterised in that** said motorised means (4) make it possible to servo-control said control member (2) into position in a predetermined position, referred to as "autorotation position" (9), in which said control member (2) generates a control setpoint for servo-controlling a current collective pitch of the blades (13) of said main rotor (11) to said "autorotation collective pitch", and **in that** said first stop position (5) of said control member (2) coincides with a "desynchronisation position" (14) in which said control member (2) generates a control setpoint for servo-controlling a current collective pitch of the blades (13) of the main rotor (11) with a "collective desynchronisation pitch" which makes it possible to desynchronise the rotary movement between said main rotor (11) and a power plant (25) of said rotorcraft (10).

2. A method according to Claim 1,
**characterised in that** said range (8) of positions of said control member (2) comprises a second stop position (15) of said control member (2), said second stop position (15) being generated by said motorised means (4) by exerting a second predetermined force which opposes said manual actuation force exerted on said control member (2) by said pilot of said rotorcraft (10), said second predetermined force being exerted locally on said range (8) of positions of said control member (2) when said control member (2) is arranged at the level of said second stop position (15), said second predetermined force being greater than said manual actuation force exerted on said control member (2) by said pilot.

3. A method according to Claim 2,
**characterised in that** said second stop position (15) of said control member (2) coincides with a limit position (16) of said control member (2) in which said control member (2) generates a control setpoint which makes it possible to servo-control a current collective pitch of the blades (13) of said main rotor (11) to a minimum pitch of the blades (13) of said main rotor (11) generating a maximum speed of rotation of said main rotor (11) during said autorotation flight phase of said rotorcraft (10).

4. A method according to any one of Claims 1 to 3,
**characterised in that** said control method (30) comprises a step of generating sensory signals (33) which make it possible to inform said pilot of said rotorcraft (10), said sensory signals being representative of said current collective pitch of the blades (13) of said main rotor (11) and said "autorotation collective pitch" calculated during said calculation step (31).

5. A method according to Claim 4,
**characterised in that** said sensory signals are representative of said minimum pitch of said blades (13) of said main rotor (11) generating a maximum speed of rotation of said main rotor (11) during said autorotation flight phase of said rotorcraft (10).

6. A method according to any one of Claims 1 to 5,
**characterised in that** said motorised means (4) make it possible to displace a stick (22) of said control member (2) relative to a support (20) integral with a framework (21) of said rotorcraft (10) and to exert a return-to-position force on said stick (22) of said control member (2) when a current position of said control member (2) is different from said "autorotation position" (9).

7. A control system (1) for controlling a main rotor (11) of a rotorcraft (10) for performing an autorotation flight phase of said rotorcraft (10), said control system (1) comprising:
• a control member (2) for controlling the collective pitch of the blades (13) of said main rotor (11), said control member (2) being mobile over a range (8) of positions lying between two physical end stops (6, 7),
• a calculation unit (3) for calculating a collective blade angle, referred to as "autorotation collective pitch", of the blades (13) of said main rotor (11), said "autorotation collective pitch" enabling said main rotor (11) to turn at an optimum speed of rotation for said autorotation flight phase of said rotorcraft (10), and
• motorised means (4) for generating, on said range (8) of positions of said control member (2), a first stop position (5) of said control member (2), said first stop position (5) being generated by exerting a first predetermined force which opposes a manual actuation force exerted on said control member (2) by a pilot of said rotorcraft (10), said first predetermined force being exerted locally on said range (8) of positions of said control member (2) when said control member is arranged at the level of said first stop position (5), said first predetermined force being able to be surpassed by said manual actuation force exerted on said control member (2) by said pilot,
**characterised in that** said motorised means (4) servo-control said control member (2) into position in a predetermined position, referred to as "autorotation position" (9), in which said control member (2) generates a control setpoint for servo-controlling a current collective pitch of the blades (13) of said main rotor (11) to said "autorotation collective pitch", and **in that** said first stop position (5) of said control member (2) coincides with a "desynchronisation position" (14) in which said control member (2) generates a control setpoint for servo-controlling a current collective pitch of the blades (13) of the main rotor (11) with a "collective desynchronisation pitch" which makes it possible to desynchronise the rotary movement between said main rotor (11) and a power plant (25) of said rotorcraft (10).

8. A control system according to Claim 7,
**characterised in that** said motorised means (4) generate, over said range (8) of positions of said control member (2), a second stop position (15) of said control member (2), said second stop position (15) being generated by exerting a second predetermined force which opposes said manual actuation force exerted on said control member (2) by said pilot of said rotorcraft (10), said second predetermined force being exerted locally on said range (8) of positions of said control member (2) when said control member (2) is arranged at the level of said second stop position (15), said second predetermined force being greater than said manual actuation force exerted on said control member (2) by said pilot.

9. A control system according to Claim 8,
**characterised in that** said second stop position (15) of said control member (2) coincides with a limit position (16) of said control member (2) in which said control member (2) generates a control setpoint which makes it possible to servo-control a current collective pitch of the blades (13) of said main rotor (11) to a minimum pitch of said blades (13) of said main rotor (11) generating a maximum speed of rotation of said main rotor (11) during said autorotation flight phase of said rotorcraft (10).

10. A control system according to any one of Claims 7 to 9,
**characterised in that** said control system (1) comprises information means (12) generating sensory signals to inform said pilot of said rotorcraft (10), said sensory signals being representative of said current collective pitch of the blades (13) of said main rotor (11) and said "autorotation collective pitch" calculated by said calculation unit (3).

11. A control system according to Claim 10,
**characterised in that** said sensory signals are representative of said minimum pitch of said blades (13) of said main rotor (11) generating a maximum speed of rotation of said main rotor (11) during said autorotation flight phase of said rotorcraft (10).

12. A control system according to any one of Claims 7 to 11,
**characterised in that** said motorised means (4) displace a stick (22) of said control member (2) relative to a support (20) integral with a framework (21) of said rotorcraft (10) and exert a return-to-position force on said stick (22) of said control member (2) when a current position of said control member (2) is different from said "autorotation position" (9).

13. A rotorcraft (10) comprising a main rotor (11) for producing at least the lift of said rotorcraft (10),
**characterised in that** said rotorcraft (10) comprises a control system (1) according to any one of Claims 7 to 12 for controlling said main rotor (11) and performing an autorotation flight phase of said rotorcraft (10).
